# DEMANDE DE BREVET EUROPEEN

(11) **EP 4 644 752 A1**
(43) Date de publication de la demande: **05.11.2025**
(21) Numéro de dépôt: 24172911.0
(22) Date de dépôt: 29.04.2024
(51) Int. Cl.: F16L 9/02, F16L 57/06, F16L 58/08, B23P 15/00, B21D 41/02

(54) **COMPOSANT TUBULAIRE CHEMISÉ**

(71) Demandeur: Vallourec USA Corporation, Houston, Texas 77042 (US)
(72) Inventeur: ROUSSIE, Gabriel, 92190 Meudon (FR)
(74) Mandataire: Mbacke, Mactar

(57) **Abrégé**

Composant tubulaire (1) comprenant une chemise (5) disposée contre une surface interne d'un tube (2), une première couche de soudure (3) étant disposée contre la surface interne dudit tube (2), une extrémité de ladite chemise (5) reposant contre une surface interne de ladite première couche de soudure (3), ladite extrémité de la chemise (5) étant soudée à une deuxième couche de soudure (4), ladite deuxième couche de soudure (4) étant disposée contre la surface interne de la première couche de soudure (3).

## Description

### Domaine technique

La présente invention concerne un composant tubulaire chemisé adapté aux transports de fluides, par exemple le transport ou l'exploitation du pétrole, du gaz, de l'hydrogène. L'invention s'applique en particulier à la capture, le stockage et l'utilisation du carbone, aussi nommé en anglais « Carbon Capture and Storage and Use » (CCUS).

### Arrière-plan technologique

Des composants tubulaires métalliques sont largement utilisés dans différents domaines de l'industrie de l'énergie tels que la production électrique, le pétrole et le gaz, ainsi que dans la construction mécanique. Comme la plupart des produits métallurgiques, les composants tubulaires sont susceptibles d'être soumis à des conditions environnementales difficiles telles que des atmosphères corrosives et des conditions météorologiques extrêmes.

Il est connu de l'art antérieur des composants tubulaires comportant une chemise disposée contre la surface interne d'un tube. Ladite chemise étant soudée directement contre la surface interne dudit tube au niveau d'une extrémité dudit tube.

Cependant, un tel composant tubulaire présente de nombreux inconvénients.

En effet, dans les composants tubulaires de l'art antérieur, la chemise est directement soudée contre la surface interne du tube, ce qui provoque, sous l'effet de la chaleur, la fusion de la chemise, du tube et de la couche de soudure.

Cette zone de fusion est appelée « point triple » (aussi nommé en anglais « *triple point* »*.*

En outre, ce point triple est une zone propice à la corrosion.

Il existe donc un besoin de fournir un composant tubulaire évitant ce triple point et restant simple à fabriquer.

### Résumé

L'exploitation pétrolière, de gaz ou autre nécessite un nombre important de tubes. Du fait des nombreuses contraintes que subissent ces tubes aussi bien lors de leur installation que durant leur exploitation, ces tubes répondent à des normes afin d'éviter toute dégradation et toute fuite dans l'environnement.

En particulier, il est nécessaire de s'assurer qu'un composant tubulaire répond à des exigences de fiabilité et qualité. Ainsi, un composant tubulaire soumis à des contraintes doit répondre à des exigences pour rester fiable.

Une idée à la base de l'invention est de fournir un composant tubulaire simple à fabriquer et présentant une meilleure résistance à la corrosion. En particulier, une idée à la base de l'invention est de supprimer le point triple entre la chemise, le tube et la soudure. Une idée à la base de l'invention est de fournir un composant tubulaire avec une meilleure résistance aux fuites.

Pour cela, l'invention fournit un composant tubulaire comprenant une chemise disposée contre une surface interne d'un tube, une première couche de soudure étant disposée contre la surface interne dudit tube, une extrémité de ladite chemise reposant contre une surface interne de ladite première couche de soudure, ladite extrémité de la chemise étant soudée à une deuxième couche de soudure, ladite deuxième couche de soudure étant disposée contre la surface interne de la première couche de soudure.

Selon un mode de réalisation, le tube est un tube en acier, de préférence un tube d'acier non allié (ou tube au carbone). Préférentiellement, le tube est réalisé à partir d'aciers faiblement alliés et traités thermiquement.

L'acier au carbone procure une meilleure robustesse au tube. L'acier au carbone a l'avantage d'être accessible.

Dans un mode de réalisation particulier, la chemise est composée d'un alliage résistant à la corrosion (aussi nommé en anglais « *Corrosion-Resistant Alloy* » ou *« CRA »*).

Cet alliage permet de fournir une résistance renforcée à la corrosion. La chemise est ainsi plus résistante à la corrosion et apte à être soudée.

Préférentiellement, la première couche de soudure et la deuxième de couche sont réalisées à partir d'un fil de soudage adapté à la chemise. Le but étant de limiter la diffusion du carbone en direction de la chemise.

Avantageusement, la première couche de soudure et la deuxième couche de soudure présentent la même composition. Cela permet de mieux contrôler la diffusion du carbone.

Grâce à ces caractéristiques, il est possible de fournir un composant tubulaire simple à fabriquer, présentant une meilleure résistance à la corrosion ainsi qu'une meilleure résistance aux fuites. Plus particulièrement, le composant tubulaire de la présente invention permet de n'avoir que deux matériaux qui fusionnent.

Selon des modes de réalisation, un tel composant tubulaire peut comporter une ou plusieurs des caractéristiques suivantes, seules ou en combinaison.

Selon un mode de réalisation, la première couche de soudure est disposée contre la surface interne d'une extrémité du tube.

De préférence, la première couche de soudure présente une épaisseur de 1,5 mm à 3 mm.

Grâce à ces caractéristiques, le dépôt de la première couche de soudure permet à une extrémité de la chemise de s'appuyer contre la surface interne de ladite première couche de soudure. Ainsi, la soudure de la chemise se fait en contact avec la première couche de soudure et non pas directement contre la surface interne du tube.

Dans un mode préféré de réalisation, la deuxième couche de soudure affleure avec une surface interne de la chemise. Cela permet d'avoir des tubes soudés de diamètre interne équivalent, ce qui est mieux pour l'écoulement et la maintenance.

De manière préférentielle, le composant tubulaire comprend un tube avec une extrémité déformée dans le sens radial.

Selon un autre aspect de la présente invention, la première couche de soudure s'étend sur la longueur de l'extrémité dudit tube déformée dans le sens radial.

Grâce à ces caractéristiques, le composant tubulaire est assemblé à un autre composant tubulaire. En d'autres termes, l'extrémité du tube déformée permet le couplage de ladite extrémité déformée à une extrémité d'un deuxième tube.

De préférence, la surface interne de la première couche de soudure affleure avec une surface interne du corps du tube. En d'autres termes, l'épaisseur de la première couche de soudure est égale à la variation de diamètre interne dans la zone déformée par rapport au diamètre interne du corps du tube. Cela permet d'avoir des tubes soudés de diamètre interne équivalent, ce qui est mieux pour l'écoulement et la maintenance.

Grâce à ces caractéristiques, cela permet une meilleure continuité de la protection anti-corrosion du composant tubulaire.

Selon une autre caractéristique avantageuse de la présente invention, l'épaisseur du tube est constante le long dudit tube.

En effet, constante dans le sens où le tube ne présente pas de zone singulière telle qu'une cavité ou un bossage qui soit-au-delà des tolérances normales de fabrication. Le maintien de l'épaisseur du tube assure la bonne tenue mécanique.

Grâce à ces caractéristiques, la fabrication du tube reste simple et ne nécessite pas d'effort particulier.

Selon un mode de réalisation, une extrémité de la chemise est déformée dans le sens radial.

De préférence, une extrémité de la chemise est déformée sur une longueur d'environ 50 mm à 250 mm.

La déformation de la chemise permet une étroite correspondance de ladite chemise déformée au diamètre interne de la zone de recouvrement et par conséquent de plaquer l'extrémité déformée de la chemise contre la surface interne de la première couche de soudure.

Selon un mode de réalisation, le procédé de réalisation d'un composant tubulaire de la présente invention comprend les étapes suivantes :
- déposer une première couche de soudure contre une surface interne d'une extrémité d'un tube,
- insérer une chemise à l'intérieur dudit tube, une extrémité de ladite chemise reposant contre une surface interne de ladite première couche de soudure,
- déposer une deuxième couche de soudure contre la surface interne de la première couche de soudure, ladite deuxième couche de soudure étant soudée à l'extrémité de ladite chemise.

Préférentiellement, le procédé comprend une étape de déformation dans le sens radial de l'extrémité du tube.

Selon un mode de réalisation préféré, le procédé comprend une étape de déformation dans le sens radial de l'extrémité de la chemise.

Selon un aspect de la présente invention, le procédé comprend une étape d'expansion de la chemise contre la surface interne du tube et la surface interne de la première couche de soudure.

Selon un mode de réalisation, lors de cette étape d'expansion, la chemise est expansée sur toute sa longueur. Autrement dit, la chemise est expansée contre la surface interne du tube et contre la surface interne de la première couche de soudure.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

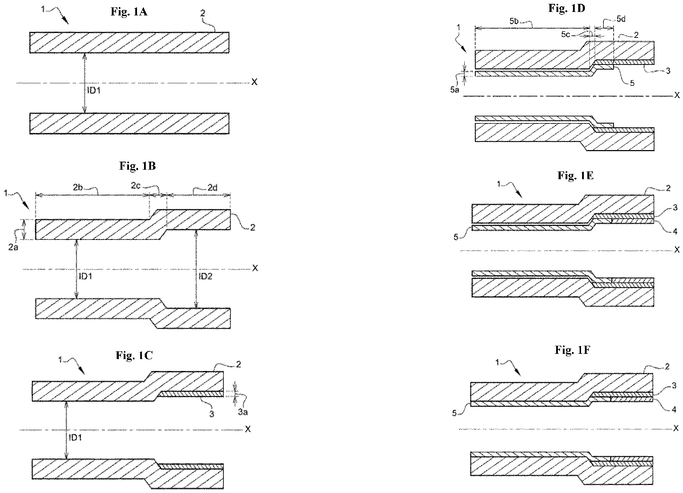

Les figures 1A, 1B, 1C, 1D, 1E et 1F représentent des coupes longitudinales d'une extrémité d'un composant tubulaire chemisé à différentes étapes de la mise en oeuvre du procédé de la présente invention.

### Définitions :

Les termes suivants sont définis dans le cadre de l'invention :
On entend par « chemise », un revêtement de protection se développant contre la surface interne du tube (aussi nommée « *liner* » en anglais).

On entend par « déformation dans le sens radial » le fait d'augmenter le diamètre d'une extrémité d'un tube ou le diamètre d'une extrémité d'une chemise.

On entend ici par « plaquer » une chemise, le fait de recouvrir la surface interne du tube avec la chemise.

### Description du mode de réalisation

Il est fait référence aux figures 1A, 1B, 1C, 1D, 1E et 1F qui illustrent des vues en coupe longitudinale d'une extrémité d'un composant tubulaire chemisé à différents stades selon un mode de réalisation de l'invention. Dans un souci de simplicité, une seule des deux extrémités du tube est illustrée. Préférentiellement, l'autre extrémité du tube est dans la même configuration que l'extrémité du tube représentée dans les figures 1A à 1F.

Sur la figure 1A, on a représenté l'extrémité d'un composant tubulaire 1 comprenant un tube 2 étendu selon un axe longitudinal X.

Le tube 2 est un tube en acier au carbone. Le tube 2 comprend en outre un diamètre interne ID1 constant sur toute sa longueur.

La figure 1B illustre le tube 2 déformé dans le sens radial. De ce fait, le tube 2 comprend une épaisseur 2a, un corps 2b, une zone de transition 2c et une extrémité 2d. Le corps 2b et l'extrémité 2d du tube 2 sont sensiblement parallèles à l'axe longitudinal X.

Le diamètre interne ID1 du corps 2b représente le diamètre minimal que peut avoir le tube 2.

Le diamètre interne ID2 de l'extrémité 2d représente le diamètre maximal que peut avoir le tube 2.

Le diamètre de la zone de transition 2c évolue de ID1 vers ID2.

L'épaisseur 2a du tube 2 est maintenue constante sur toute la longueur du tube. En d'autres termes l'épaisseur 2a reste la même pour le corps 2b, la zone de transition 2c et l'extrémité 2d du tube 2.

La figure 1C représente le tube 2 déformé radialement au niveau de l'extrémité 2d et de la zone de transition 2c, et comprenant une première couche de soudure 3. Le dépôt de cette première couche de soudure 3 se fait contre la surface interne du tube 2. Particulièrement, la première couche de soudure 3 s'étend, parallèlement à l'axe longitudinal X de l'extrémité 2d à la zone de transition 2c du tube 2.

La première couche de soudure 3 comprend une épaisseur 3a qui reste constante sur toute sa longueur au niveau de l'extrémité 2d.

Dans la figure 1D, une chemise 5, présentant une extrémité 5d préalablement déformée dans le sens radial, est insérée à l'intérieur du tube 2 dans le sens de l'axe longitudinal X. La chemise 5 est composée d'un alliage résistant à la corrosion. En outre, la chemise 5 présente un corps 5b et une zone de transition 5c.

Selon un mode alternatif, la chemise 5 n'est pas préalablement déformée dans le sens radial.

La déformation radiale préalable de la chemise 5 permet à ladite chemise 5 d'être étroitement en contact avec la surface interne de la première couche de soudure 3. Par conséquent, la chemise 5 est disposée contre la surface interne du corps 2b du tube 2, et partiellement contre la surface interne de la zone de transition 2c du tube 2 et enfin contre la surface interne de la première couche de soudure 3. La chemise 5 est mécaniquement liée à la première couche de soudure 3 et au tube 2. Afin de simplifier la compréhension, la figure 1D illustre une chemise 5 espacée du corps 2b et de la zone de transition 2c par un interstice, ceci illustre la configuration avant la liaison mécanique du corps 5b et de la zone de transition 5C de ladite chemise 5 avec la surface interne du corps 2b et de la zone de transition 2c du tube 2.

La chemise 5 comprend une épaisseur 5a qui est maintenue sensiblement constante sur toute la longueur.

Selon la figure 1E, une deuxième couche de soudure 4 est déposée, parallèlement à l'axe longitudinal X, contre la surface interne de la première couche de soudure 3. La jonction entre la chemise 5 et la deuxième couche de soudure 4 se fait par soudure. Ladite chemise 5 est alors soudée à la deuxième couche de soudure 4.

Par conséquent, la première couche de soudure 3 est conjointement recouverte par la chemise 5 et la deuxième couche de soudure 4.

La deuxième couche de soudure 4 est de même composition que la première couche de soudure 3.

En outre, la deuxième couche de soudure 4 affleure avec la surface interne de la chemise 5 dans le sens longitudinal de l'axe X.

Dans la figure 1F, la chemise 5 est plaquée contre la surface interne du tube 2 et contre la surface interne de la première couche de soudure 3 par mise sous pression de fluide.

Selon une particularité de réalisation non représentée, le vide est réalisé au niveau du tube 2.

## Revendications

1. Composant tubulaire (1) comprenant une chemise (5) disposée contre une surface interne d'un tube (2), une première couche de soudure (3) étant disposée contre la surface interne dudit tube (2), une extrémité de ladite chemise (5) reposant contre une surface interne de ladite première couche de soudure (3), ladite extrémité de la chemise (5) étant soudée à une deuxième couche de soudure (4), ladite deuxième couche de soudure (4) étant disposée contre la surface interne de la première couche de soudure (3).

2. Composant tubulaire (1) selon la revendication 1, dans lequel la première couche de soudure (3) est disposée contre la surface interne d'une extrémité du tube (2).

3. Composant tubulaire (1) selon l'une quelconques des revendications précédentes, dans lequel la deuxième couche de soudure (4) affleure avec une surface interne de la chemise (5).

4. Composant tubulaire (1) selon l'une quelconque des revendications précédentes, dans lequel une extrémité du tube (2) est déformée.

5. Composant tubulaire (1) selon la revendication 3, dans lequel la surface interne de la première couche de soudure (3) affleure avec une surface interne du corps (2b) du tube (2).

6. Composant tubulaire (1) selon l'une quelconque des revendications 4 ou 5, dans lequel le tube (2) présente une épaisseur (2a), ladite épaisseur (2a) du tube étant constante le long dudit tube (2).

7. Composant tubulaire (1) selon l'une quelconque des revendications 3 à 5, dans lequel l'extrémité de la chemise (5) est déformée.

8. Procédé de réalisation d'un composant tubulaire (1) selon l'une quelconque des revendications 1 à 7 comprenant les étapes suivantes :
• déposer une première couche de soudure (3) contre une surface interne d'une extrémité d'un tube (2),
• insérer une chemise (5) à l'intérieur dudit tube (2), une extrémité de ladite chemise (5) reposant contre une surface interne de ladite première couche de soudure (3),
• déposer une deuxième couche de soudure (4) contre la surface interne de la première couche de soudure (3), ladite deuxième couche de soudure (4) étant soudée à l'extrémité de ladite chemise (5).

9. Procédé selon la revendication 8, comprenant une étape de déformation de l'extrémité du tube (2).

10. Procédé selon l'une quelconque des revendications précédentes, comprenant une étape de déformation de l'extrémité de la chemise (5).

11. Procédé selon l'une quelconque des revendications précédentes, comprenant une étape d'expansion de la chemise (5) contre la surface interne du tube (2) et la surface interne de la première couche de soudure (3).
